# EUROPÄISCHE PATENTSCHRIFT

(11) **EP 2 419 305 B1**
(45) Veröffentlichungstag und Bekanntmachung des Hinweises auf die Patenterteilung: **07.05.2014**
(21) Anmeldenummer: 10718518.3
(22) Anmeldetag: 15.04.2010
(51) Int. Cl.: B60R 21/203, B60R 21/201, B60R 21/217

(54) **GASSACKANORDNUNG FÜR EIN FAHRZEUGINSASSEN-RÜCKHALTESYSTEM UND VERFAHREN ZUM HERSTELLEN EINER GASSACKANORDNUNG**
AIRBAG ARRANGEMENT FOR A VEHICLE OCCUPANT RESTRAINT SYSTEM AND METHOD FOR PRODUCING AN AIRBAG ARRANGEMENT
DISPOSITIF DE SAC À GAZ POUR UN SYSTÈME DE RETENUE DE PASSAGERS D'UN VÉHICULE ET PROCÉDÉ DE PRODUCTION D'UN DISPOSITIF DE SAC À GAZ

(30) Priorität: 16.04.2009 DE 102009017920
(43) Veröffentlichungstag der Anmeldung: 22.02.2012
(73) Patentinhaber: Takata AG, 63743 Aschaffenburg (DE)
(72) Erfinder: WEIGAND, Steffen, 63739 Aschaffenburg (DE); HOFMANN, Thomas, 63739 Aschaffenburg (DE)
(74) Vertreter: Staroske, Sandro
(86) Internationale Anmeldenummer: PCT/EP2010/054962
(87) Internationale Veröffentlichungsnummer: WO 2010/119096

(56) Entgegenhaltungen:
- DE-A1-102006 013 990
- US-A- 5 096 222
- US-A- 5 454 588
- US-A- 5 605 347
- US-A1- 2003 209 888
- US-A1- 2005 230 938

## Beschreibung

Die Erfindung betrifft eine Gassackanordnung für ein Fahrzeuginsassen-Rückhaltesystem gemäß Anspruch 1 sowie ein Verfahren zum Herstellen einer derartigen Gassackanordnung gemäß Anspruch 15.

Gassackanordnungen mit einem Gassackpaket, das einen in einer Umhüllung vakuumverpackten Gassack aufweist, sind aus dem Stand der Technik bekannt. Das Gassackpaket wird zusammen mit einem Gasgenerator zum Aufblasen des Gassacks an einem Gasgeneratorträger festgelegt, insbesondere durch Verrasten von Befestigungsstrukturen des Gasgeneratorträgers mit dem Gassackpaket.

Aus dem Dokument US 5 605 347 A ist ein Airbagmodul mit vereinfachter Kissenbefestigung bekannt. Das Airbagmodul besitzt ein Halteteil mit einer Reihe von vorstehenden Laschen. Diese Laschen erstrecken sich durch Schlitze des Airbagmaterials und greifen außerdem in Schlitze eines Modulgehäuses. Die Einzelteile sind so ausgerichtet und dimensioniert, dass sich das Halteteil beim Zusammenbau elastisch verformt und somit ermöglicht, dass die Laschen in die Gehäuseschlitze einschnappen.

Das Dokument US 5 096 222 A beschreibt ein Airbagmodul für eine Fahrzeuginsassenrückhaltevorrichtung mit einer Gassackeinheit, in der ein flexibler Gassack in einer vorbestimmten gefalteten Anordnung mittels Verpackungsmitteln umschlossen ist, und einem Behälter, mit dem die vorverpackte Gassackeinheit derart koppelbar ist, dass ein ausgewählter Abschnitt des Gassacks in einer kraftübertragenden Beziehung mit dem Behälter angeordnet ist.

Das Dokument DE 10 2006 013 990 A1 beschreibt eine Befestigungsanordnung in einem Airbagmodul mit einem Gasgenerator, der mindestens einen seitlich über diesen hinausragenden Befestigungsabschnitt aufweist, mit einem Generatorträger, mit einem Gassack mit Einblasmund, mit einer Abdeckkappe, und mit Rastelementen zur Verbindung des Generatorträgers mit der Abdeckkappe. Der Gassack weist im Bereich des Einblasmundes eine Platte auf, wobei die Platte eine Öffnung für den Gasgenerator aufweist. Zur Halterung der Platte und des mit dieser verbundenen Gassacks sowie zur Halterung des Befestigungsabschnitts des Gasgenerators zwischen dem Generatorträger und der Platte mittels der Rastelemente sind Mittel vorgesehen, wobei die Platte mindestens im Bereich dieser Mittel zur Halterung größer ist als die Außenabmessung des gefalteten Gassacks im Bereich des Einblasmundes.

Das Dokument US 5 454 588 A offenbart eine Gassackanordnung zur Kopplung eines aufblasbaren Gassacks mit einem Rückhaltesystem.

Das von der vorliegenden Erfindung zu lösende Problem besteht darin, eine auf möglichst einfache Weise herstellbare Gassackanordnung mit einem Gassackpaket und ein Verfahren zum Herstellen einer derartigen Gassackanordnung zu schaffen.

Dieses Problem wird durch die Gassackanordnung mit den Merkmalen gemäß Anspruch 1 sowie durch das Verfahren mit den Merkmalen gemäß Anspruch 15 gelöst. Weiterbildungen der Erfindung sind in den abhängigen Ansprüchen angegeben.

Demnach wird eine Gassackanordnung für ein Fahrzeuginsassen-Rückhaltesystem bereitgestellt, mit
- einem Gassackpaket, das einen zum Schutz eines Fahrzeuginsassen aufblasbaren Gassack sowie eine Hülle, in der der Gassack vakuumverpackt ist, aufweist;
- einem Gasgenerator zum Aufblasen des Gassacks;
- einem Gasgeneratorträger, an dem der Gasgenerator angeordnet ist;
- einem an dem Gasgeneratorträger befestigten Montageelement zur Aufnahme des Gassackpaketes, wobei das Montageelement Befestigungsmittel aufweist, über die es formschlüssig mit dem Gassackpaket verbunden ist, wobei das Montageelement mehrere Teilelemente aufweist.

Eine derartige Gassackanordnung kann beispielsweise als Bestandteil einer Schutzvorrichtung in das Lenkrad des Fahrzeugs integriert oder auch auf der Beifahrerseite des Fahrzeugs angeordnet werden.

Die formschlüssige Verbindung zwischen dem Montageelement und dem Gassackpaket wird insbesondere dadurch hergestellt, dass die Befestigungsmittel des Montageelementes eine Befestigungsstruktur umfassen, die in eine Ausnehmung in dem Gassackpaket eingreift. Die Ausnehmung wird insbesondere durch Eindrücken des Gassacks und der Hülle, die den Gassack umgibt, erzeugt, d.h. die Ausnehmung stellt keine Öffnung in,der Hülle oder in dem Gassack dar, durch die Gas aus dem Gassackpaket nach außen entweichen könnte.

Gemäß einem Ausführungsbeispiel ist das Gassackpaket im Wesentlichen zylindrisch ausgeformt, d.h. es weist zwei einander gegenüberliegende, insbesondere kreisförmige, Stirnseiten auf, zwischen denen sich eine Mantelfläche erstreckt. In einer Weiterbildung dieser Variante ist die Ausnehmung, in die sich die Befestigungsstruktur des Montageelementes hineinerstreckt, in der Mantelfläche ausgebildet, zum Beispiel in Form einer umlaufenden Nut.

Selbstverständlich muss die Ausnehmung jedoch nicht in Form einer umlaufenden Nut ausgebildet sein, sondern es ist auch möglich, dass eine einzelne, lokal begrenzte (d.h. nicht umlaufende) Ausnehmung oder mehrere zueinander beabstandete Ausnehmungen in der nach außen, d.h. zu dem Montageelement hin, weisenden Seite des Gassackpaketes ausgebildet ist/sind. Beispielsweise befindet sich die einzelne Ausnehmung bzw. befinden sich die mehreren Ausnehmungen im Bereich eines unteren, d.h. dem Gasgenerator zugewandten, Endes des Gassackpaketes.

Die Befestigungsstruktur des Montageelementes ist z.B. in Form eines, insbesondere elastischen, Rastelementes ausgebildet, das in der Ausnehmung des Gassackpakets verrastet ist. Ein solches Rastelement kann einstückig mit dem Montageelement und zum Beispiel als ein nach innen, d.h. auf das Gassackpaket zu, vom übrigen Montageelement abstehender massiver Vorsprung ausgeformt sein.

Es ist jedoch auch denkbar, dass die Befestigungsstruktur laschenartig von einem Bereich des Montageelementes auf das Gassackpaket zu abgebogen ist und mit einem Laschenende in die Ausnehmung des Gassackpaketes eingreift. Darüber hinaus können auch unterschiedliche Arten von Befestigungsstrukturen in Kombination an dem Montageelement ausgebildet sind, zum Beispiel massive Vorsprünge oder Haken und eine oder mehrere Befestigungslaschen.

In einer weiteren Ausführungsform der Erfindung ist der Gasgeneratorträger aus einem Kunststoff gebildet oder weist einen Kunststoff auf. In dieser Variante wird über das Montageelement eine stabile und einfach herstellbare Verbindung zwischen dem Gasgeneratorträger und dem Gassackpaket realisiert, zum Beispiel ohne, dass der Gasgeneratorträger selber Befestigungsstrukturen zum Befestigen an dem Gassackpaket aufweisen muss. Insbesondere ist es nicht notwendig, separate Kunststoffelemente vorzusehen, die in eine Ausnehmung des Gassackpaketes eingeschwenkt werden, um den Gasgeneratorträger mit dem Gassackpaket zu verbinden.

Das Montageelement ist insbesondere aus einem Metall gebildet, wobei die Befestigungsmittel insbesondere Befestigungsstrukturen in Form von aus dem Montageelement durch das Erzeugen von Freischnitten herausgebildeten Befestigungslaschen aufweist. Für das Montageelement kommen jedoch auch andere Materialien oder Materialkombinationen in Frage, z.B. Kunststoffmaterialien.

Gemäß einer weiteren Variante der Erfindung weist das Montageelement Befestigungsmittel auf, über die es an dem Gasgeneratorträger festgelegt ist. Insbesondere erlauben diese Befestigungsmittel analog zu den Befestigungsmitteln, die zum Festlegen des Montageelementes an dem Gassackpaket dienen, eine formschlüssige Verbindung zwischen dem Montageelement und dem Gasgeneratorträger.

Beispielsweise umfassen diese Befestigungsmittel mindestens ein Rastelement, das in eine Aussparung des Gasgeneratorträgers eingreift. Alternativ oder zusätzlich können diese Befestigungsmittel mindestens einen Befestigungsbolzen umfassen, der eine Öffnung in dem Gasgeneratorträger durchgreift und der zum Beispiel auf dessen dem Gassackpaket abgewandten Seite mit einer Mutter an dem Gasgeneratorträger festgelegt ist. Der Befestigungsbolzen kann zum Beispiel mit dem Montageelement verbunden oder mit diesem einstückig ausgebildet sein. Zudem kann der Befestigungsbolzen eine an dem Gasgenerator ausgebildete oder mit diesem verbundene Struktur durchgreifen und somit gleichzeitig zur Befestigung des Gasgenerators an dem Gasgeneratorträger dienen.

Darüber hinaus ist auch denkbar, dass der Gasgenerator einen Befestigungsbolzen aufweist bzw. mit einem Befestigungsbolzen verbunden ist, der eine Öffnung in dem Montageelement und eine Öffnung in dem Gasgeneratorträger durchgreift, um den Gasgenerator und das Montageelement an dem Gasgeneratorträger festzulegen.

In einer weiteren Ausgestaltung der Erfindung ist das Montageelement hohlzylindrisch oder ringförmig ausgebildet, wobei z.B. in einem Ende des Montageelementes eine Öffnung zum Einführen des Gassackpaketes bei der Montage der Gassackanordnung und in dem diesem Ende gegenüberliegenden Ende des Montageelementes eine Öffnung, in der der Gasgenerator angeordnet ist, vorgesehen ist. Die Öffnung zum Einführen des Gassackpaketes ist insbesondere dadurch realisiert, dass dieses Ende des Montageelementes vollständig offen ist, d.h. die Öffnung besitzt einen Durchmesser, der dem Innendurchmesser des Montageelementes entspricht und weist somit keine von der Mantelfläche nach innen abstehende Randstruktur auf.

Das diesem Ende gegenüberliegende Ende des Montageelementes ist jedoch insbesondere mit einer Öffnung versehen, die einen im Vergleich mit dem Innendurchmesser des Montageelementes kleineren Durchmesser aufweist und somit von einem von der Mantelfläche nach innen abstehenden, ringförmigen Rand begrenzt ist. In diesem Rand sind zum Beispiel Öffnungen zum Durchführen eines oder mehrerer Befestigungsbolzen zum Festlegen des Gasgenerators und/oder des Montageelementes an dem Gasgeneratorträger vorgesehen.

Es ist auch möglich, dass die mehreren Teilelemente des Montageelementes z.B. beabstandet zueinander angeordnet sind. Beispielsweise weist das Montageelement zwei Teilelemente (insbesondere in Form von Halbschalen) auf, die (z.B. bei zylindrisch ausgeführtem Gassackpaket) seitlich an dem Gassackpaket angeordnet werden.

In einer anderen Weiterbildung der Erfindung weist der Gasgeneratorträger mindestens eine Öffnung auf, durch die das Einrasten des Rastelementes optisch und/oder mechanisch überprüfbar ist. Diese Öffnung ist insbesondere eine Durchgangsöffnung in dem Gasgeneratorträger, die sich im Bereich der Ausnehmung des Gassackpakets befindet.

Zur Aufnahme des Gasgenerators kann das Gassackpaket eine zusätzliche Ausnehmung aufweisen, d.h. eine Einstülpung, in die der Gasgenerator mit einem Abschnitt hineinragt. Insbesondere ist diese Ausnehmung bei zylindrisch ausgebildetem Gassackpaket in einer der Enden (Stirnseiten) des Gassackpaketes ausgebildet. Der Gasgenerator ist z.B. in Form eines Topfgasgenerators ausgebildet, d.h. er weist einen im Wesentlichen kreiszylindrischen Querschnitt auf, wobei die zu seiner Aufnahme in dem Gassackpaket ausgebildete Ausnehmung korrespondierend als kreiszylindrischer Hohlraum ausgeformt ist.

In einer anderen Ausgestaltung der Erfindung ist ein Abschnitt der Hülle, die den Gassack umgibt, umgefaltet und zwischen dem übrigen Gassackpaket und dem Montageelement angeordnet. Insbesondere ist dieser Abschnitt ein Hüllenüberstand, der ursprünglich z.B. nach oben, d.h. von einer dem Gasgenerator abgewandten Seite des Gassackpaketes, oder zur Seite von dem übrigen Gassackpaket abstand, wobei durch das Umfalten und Anordnen dieses Abschnittes zwischen dem Gassackpaket und dem Montageelement eine Behinderung der Herstellung der Gassackanordnung oder des Entfaltens des Gassacks vermieden wird.

Des Weiteren betrifft die Erfindung ein Verfahren zum Herstellen einer Gassackanordnung mit den Schritten:
- Bereitstellen eines Gassackpaketes sowie eines Montageelementes, das Befestigungsmittel zum Herstellen einer formschlüssigen Verbindung mit dem Gassackpaket aufweist und das mehrere Teilelemente aufweist;
- Einführen des Gassackpaketes in das Montageelement, bis eine formschlüssige Verbindung zwischen Gassackpaket und Montageelement hergestellt ist; und
- Befestigen des Montageelementes an einem Gasgeneratorträger.

Die Erfindung wird im Folgenden anhand von Ausführungsbeispielen unter Bezugnahme auf die Figuren näher erläutert. Es zeigen:
- Fig. 1: Eine Schnittansicht einer Gassackanordnung gemäß einem ersten Ausführungsbeispiel der Erfindung;
- Fig. 2: eine Schnittansicht einer Gassackanordnung gemäß einem zweiten Ausführungsbeispiel der Erfindung; und
- Fig. 3: eine Schnittansicht einer Gassackanordnung gemäß einem dritten Ausführungsbeispiel der Erfindung.

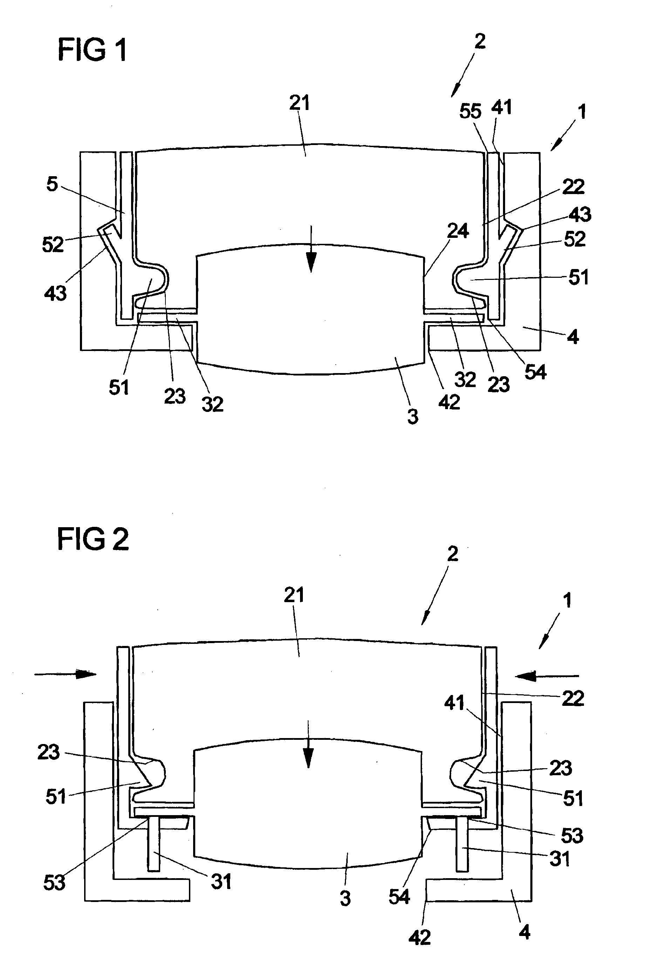

Die in Fig. 1 dargestellte Gassackanordnung 1 umfasst ein Gassackpaket 2, das aus einem Gassack 21 besteht, der von einer als Folie 22 ausgebildeten Hülle umgeben und in dieser vakuumverpackt ist. Des Weiteren umfasst die Gassackanordnung 1 einen Gasgenerator in Form eines Topfgasgenerators 3, der an einem Gasgeneratorträger 4 festgelegt ist. Das Gassackpaket 2 ist über ein Montageelement 5 an dem Gasgeneratorträger 4 befestigt.

Das Montageelement 5 weist Befestigungsmittel in Form von Rastnasen 51 auf, die in eine Nut 23 des Gassackpaketes 2 eingreifen und das Gassackpaket formschlüssig mit dem Montageelement verbinden.

In dem dargestellten Ausführungsbeispiel ist das Gassackpaket näherungsweise zylindrisch ausgebildet, wobei die Nut 23 umlaufend in der Mantelfläche des Gassackpaketes verläuft. Das Montageelement 5 ist ringartig ausgestaltet und erstreckt sich mit einer Seitenwand zwischen dem Gasgeneratorträger 4 und dem Gassackpaket 2. Die Rastnasen 51 können ebenfalls als umlaufende Struktur ausgebildet sein, es ist jedoch insbesondere auch möglich, dass nur eine oder mehrere zueinander beabstandete Rastnasen vorhanden ist/sind.

Das Montageelement 5 weist neben den Rastnasen 51 Rastarme 52 auf, die in Aussparungen 43 der Seitenwand des Gasgeneratorträgers 4 verrastet sind, wodurch eine formschlüssige Verbindung des Gasgeneratorträgers mit dem Montageelement realisiert wird. Die Rastelemente 52 stehen im Unterschied zu den Rastnasen 51 nach außen von der Seitenwand des Montageelementes 5 ab, d. h. sie weisen von dem Gassackpaket 2 weg.

Darüber hinaus weist das Montageelement 5 in seinen Enden jeweils eine Öffnung 54, 55 auf, wobei durch die dem Gasgenerator abgewandte Öffnung 55 z.B. das Gassackpaket 2 zur Montage der Gassackanordnung in das Montageelement eingeführt werden kann und durch die gegenüberliegenden Öffnung 54 der Gasgenerator in das Montageelement hineinragt.

Der ebenfalls im Wesentlichen hohlzylindrisch ausgeformte Gasgeneratorträger 4 weist in einem seiner Enden eine Öffnung 41 auf, durch die das zuvor an dem Montageelement festgelegte Gassackpaket in den Gasgeneratorträger eingeführt wird. Darüber hinaus ist weist der Gasgeneratorträger 4 in dem der Öffnung 41 gegenüberliegenden Ende eine Öffnung 42 auf, in der der Gasgenerator 3 angeordnet ist. Der Gasgenerator 3 erstreckt sich durch die Öffnung 42 des Gasgeneratorträgers und die Öffnung 54 des Montageelementes hindurch in eine Ausnehmung 24 des Gassackpaketes hinein. Zudem weist der Gasgenerator 3 zwei einander gegenüberliegende Ausleger 32 auf, die an einem die Öffnung 42 umgebenden Rand des Gasgeneratorsträgers anliegen oder an diesem festgelegt sind.

Eine Abwandlung des Ausführungsbeispiels der Figur 1 ist in Figur 2 gezeigt. Hier erfolgt die Verbindung des Montageelementes 5 nicht über Rastelemente, sondern über am Gasgenerator ausgebildete Befestigungsbolzen 31, die durch Öffnungen 53 in dem Montageelement 5 hindurchgreifen. Darüber hinaus sind in dem Gasgeneratorträger 4 ebenfalls Öffnungen vorgesehen, durch die die Befestigungsbolzen 53 hindurchgreifen und insbesondere mit einer (nicht dargestellten) Mutter an der dem Gassackpaket 2 abgewandten Seite an dem Gasgeneratorträger 4 festgelegt sind.

Die Öffnungen 53 zum Hindurchführen des Befestigungsbolzens 5 sind an einem Rand des Montageelementes angeordnet, der die Öffnung 54, durch die sich der Gasgenerator hindurch erstreckt, umgibt. Der Gasgeneratorträger 4 weist analog einen Rand um die Öffnung 42 auf, in dem Öffnungen zum Durchführen der Befestigungsbolzen 31 angeordnet sind, die im vollständig montierten Zustand der Gassackanordnung mit den Öffnungen 53 des Montageelementes fluchten. Fig. 2 zeigt die Gassackanordnung vor dem Montieren der Befestigungsbolzen an dem Gasgeneratorträger.

Des Weiteren sind gemäß dem Ausführungsbeispiel der Figur 2 die Rastnasen 51 nicht wulstartig wie in Figur 1 ausgeformt, sondern sie bilden eine nach unten weisende Seite aus, so dass eine spitzwinklige Raststruktur entsteht. Die Erfindung ist selbstverständlich nicht auf eine dieser beiden Arten von Raststrukturen festgelegt, sondern es können im Prinzip beliebige Strukturen verwendet werden, die ein Verrasten zwischen Montageelement und Gassackpaket ermöglichen.

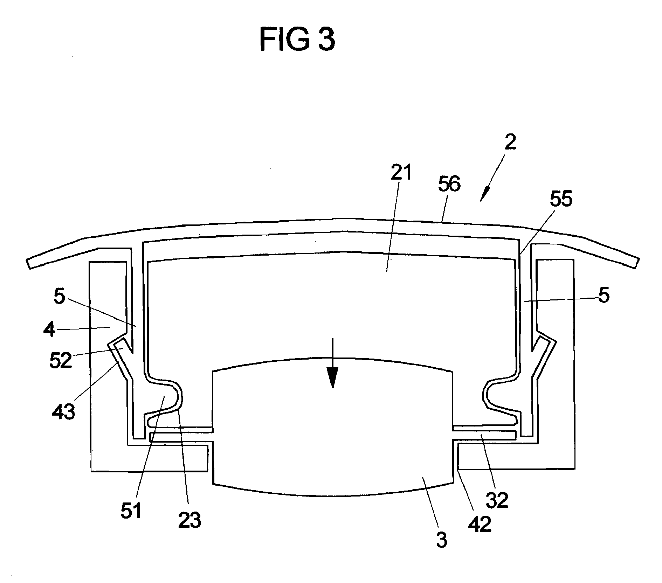

Figur 3 zeigt eine Abwandlung des Ausführungsbeispiels aus Figur 1. Das Montageelement 5 ist mit einer Gassackkappe 56 verbunden (insbesondere einstückig mit diesem gebildet), die die Öffnung 55 und somit das Gassackpaket 2 an einer dem Gasgenerator 3 abgewandten Seite überspannt. Bei im Fahrzeug angeordneter Gassackanordnung bildet die Gassackkappe somit eine zum Fahrzeuginnenraum weisende Seite der Gassackanordnung, wobei die Gassackkappe z.B. eine Schwächung aufweist, die unter dem Entfaltungsdruck des Gassacks nachgibt (insbesondere aufreißt), so dass sich der Gassack in den Fahrzeuginnenraum hinein entfalten kann.

Die Gassackkappe 56 erstreckt sich zudem seitlich über die Öffnung 55 (d.h. über das Montageelement 5) hinaus, so dass es mit einem Randabschnitt zusätzlich die dem Gasgenerator 3 abgewandte Seite des Gasgeneratorträgers 4 überdeckt.

Es wird darauf hingewiesen, dass Elemente der Ausführungsbeispiele der Figuren 1 bis 3 natürlich auch in Kombination miteinander verwendet werden können; z. B. kann das Montageelement über Befestigungsbolzen und zusätzlich auch über eine an ihm ausgebildete Raststruktur mit dem Gasgeneratorträger verbunden sein.

### Bezugszeichenliste

- 1: Gassackanordnung
- 2: Gassackpaket
- 3: Gasgenerator
- 4: Gasgeneratorträger
- 5: Montageelement
- 21: Gassack
- 22: Folie
- 23: Ausnehmung
- 24: Ausnehmung für Gasgenerator
- 31: Befestigungsbolzen
- 41: Ende Gasgeneratorträger
- 42: Öffnung
- 51: Rastnase
- 52: Rastarm
- 53: Öffnung
- 54: Öffnung für Gasgenerator
- 55: Öffnung für Gassackpaket
- 56: Gassackkappe

## Patentansprüche

1. Gassackanordnung für ein Fahrzeuginsassen-Rückhaltesystem, mit
- einem Gassackpaket (2), das einen zum Schutz eines Fahrzeuginsassen aufblasbaren Gassack (21) sowie eine Hülle (22), in der der Gassack vakuumverpackt ist, aufweist;
- einem Gasgenerator (3) zum Aufblasen des Gassacks (21);
- einem Gasgeneratorträger (4), an dem der Gasgenerator angeordnet ist,
**gekennzeichnet durch**
ein an dem Gasgeneratorträger (4) befestigten Montageelement (5) zur Aufnahme des Gassackpaketes (2), wobei das Montageelement (5) Befestigungsmittel aufweist, über die es formschlüssig mit dem Gassackpaket (2) verbunden ist, wobei das Montageelement (5) mehrere Teilelemente aufweist.

2. Gassackanordnung nach Anspruch 1, **dadurch gekennzeichnet, dass** die Befestigungsmittel mindestens eine Befestigungsstruktur (51) umfassen, die in eine Ausnehmung (23) des Gassackpakets (2) eingreift.

3. Gassackanordnung nach Anspruch 1 oder 2, **dadurch gekennzeichnet, dass** das Gassackpaket (2) im Wesentlichen zylindrisch ausgeformt und die Ausnehmung (23) in seiner Mantelfläche ausgebildet ist.

4. Gassackanordnung nach einem der Ansprüche 2 oder 3, **dadurch gekennzeichnet, dass** die Ausnehmung (23) des Gassackpakets (2) als umlaufende Nut ausgebildet ist.

5. Gassackanordnung nach einem der Ansprüche 2 bis 4, **dadurch gekennzeichnet, dass** die Befestigungsstruktur (51) in Form eines Rastelementes ausgebildet ist, das in der Ausnehmung (23) des Gassackpaketes (2) verrastet ist, wobei insbesondere der Gasgeneratorträger (4) mindestens eine Öffnung aufweist, über die das Einrasten des Rastelementes optisch und/oder mechanisch überprüfbar ist.

6. Gassackanordnung nach einem der vorhergehenden Ansprüche, **dadurch gekennzeichnet, dass** das Montageelement (5) Befestigungsmittel aufweist, über die es an dem Gasgeneratorträger (4) festgelegt ist, wobei insbesondere die Befestigungsmittel mindestens ein Rastelement (52) umfassen, das in einer Aussparung (43) des Gasgeneratorträgers (4) verrastet ist.

7. Gassackanordnung nach Anspruch 6, **dadurch gekennzeichnet, dass** die Befestigungsmittel mindestens einen Befestigungsbolzen umfassen, der eine Öffnung in dem Gasgeneratorträger (4) durchgreift.

8. Gassackanordnung nach einem der vorhergehenden Ansprüche, **dadurch gekennzeichnet, dass** das der Gasgenerator (3) mindestens einen Befestigungsbolzen (31) aufweist, der eine Öffnung (53) in dem Montageelement (5) und eine Öffnung in dem Gasgeneratorträger (4) durchgreift.

9. Gassackanordnung nach einem der vorhergehenden Ansprüche, **dadurch gekennzeichnet, dass** das Montageelement (5) hohlzylindrisch oder ringförmig ausgebildet ist.

10. Gassackanordnung nach Anspruch 7 oder 8 und 9, **dadurch gekennzeichnet, dass** die von dem Befestigungsbolzen (31) durchgriffene Öffnung (53) in einem Ende des Montageelementes (5) ausgebildet ist.

11. Gassackanordnung nach Anspruch 9 oder 10, **dadurch gekennzeichnet, dass** in einem Ende des Montageelementes (5) eine Öffnung (55) zum Einführen des Gassackpaketes bei der Montage der Gassackanordnung und in dem gegenüberliegenden Ende eine Öffnung (54), in der der Gasgenerator (3) angeordnet ist, vorgesehen ist.

12. Gassackanordnung nach einem der vorhergehenden Ansprüche, **dadurch gekennzeichnet, dass** das Gassackpaket (2) eine Ausnehmung (23) aufweist, in der der Gasgenerator (3) zumindest abschnittsweise angeordnet ist.

13. Gassackanordnung nach einem der vorhergehenden Ansprüche, **dadurch gekennzeichnet, dass** ein Abschnitt der Hülle (22), die den Gassack (2) umgibt, umgefaltet und zwischen dem übrigen Gassackpaket (2) und dem Montageelement (5) angeordnet ist.

14. Gassackanordnung nach einem der vorhergehenden Ansprüche, **dadurch gekennzeichnet, dass** das Montageelement mit einer Abdeckung (56) verbunden ist, die das Gassackpaket (2) an einer dem Gasgenerator (3) abgewandten Seite überspannt.

15. Verfahren zum Herstellen einer Gassackanordnung, mit den Schritten:
- Bereitstellen eines Gassackpaketes (2) sowie eines Montageelementes (5), das Befestigungsmittel zum Herstellen einer formschlüssigen Verbindung mit dem Gassackpaket (2) aufweist und das mehrere Teilelemente aufweist;
- Einführen des Gassackpaketes (2) in das Montageelement (5), bis eine formschlüssige Verbindung zwischen Gassackpaket und Montageelement hergestellt ist; und
- Befestigen des Montageelementes (5) an einem Gasgeneratorträger (4).

## Claims

1. Air bag arrangement for a vehicle occupant restraint system, comprising
- an air bag package (2), having an air bag (21), which can be inflated for the protection of a vehicle occupant, as well as an envelope (22), in which the air bag is vacuum-packed;
- a gas generator (3) for inflating the air bag (21);
- a gas generator support (4), on which the gas generator is arranged,
**characterized by**
a mounting element (5), fastened to the gas generator support (4), to receive the air bag package (2), wherein the mounting element (5) has fastening means via which it is connected to the air bag package (2) in a positive-locking manner, wherein the mounting element (5) has multiple partial elements.

2. Air bag arrangement according to Claim 1, **characterized in that** the fastening means comprising at least one fastening structure (51) which engages with a recess (23) of the air bag package (2).

3. Air bag arrangement according to Claim 1 or 2, **characterized in that** the air bag package (2) is essentially shaped cylindric and the recess (23) is formed in its shell surface.

4. Air bag arrangement according to any of Claims 2 or 3, **characterized in that** the recess (23) of the air bag package (2) is formed as circumferential groove.

5. Air bag arrangement according to any of Claims 2 to 4, **characterized in that** the fastening structure (51) is formed in the shape of a locking element, which is locked in place in the recess (23) of the air bag package (2), wherein particularly the gas generator support (4) has at least one opening, via which the latching of the locking element can be visually and/or mechanically verified.

6. Air bag arrangement according to any of the preceding claims, **characterized in that** the mounting element (5) has fastening means via which it is fixed onto the gas generator support (4), wherein particularly the fastening means comprise at least one locking element (52) which is locked in place in a notch (43) of the gas generator support (4)

7. Air bag arrangement according to Claim 6, **characterized in that** the fastening means comprise at least one fastening bolt which reaches through an opening in the gas generator support (4).

8. Air bag arrangement according to any of the preceding claims, **characterized in that** the gas generator (3) has at least one fastening bolt (31) which reaches through an opening (53) in the mounting element (5) and an opening in the gas generator support (4).

9. Air bag arrangement according to any of the preceding claims, **characterized in that** the mounting element (5) is formed hollow cylindrical or ring-shaped.

10. Air bag arrangement according to Claim 7 or 8 and 9, **characterized in that** the opening (53), through which the fastening bolt (31) reaches, is formed in one end of the mounting element (5).

11. Air bag arrangement according to Claim 9 or 10, **characterized in that** in one end of the mounting element (5) an opening (55) is provided for inserting the air bag package upon mounting the air bag arrangement and in the opposite end an opening (54) is provided in which the gas generator (3) is arranged.

12. Air bag arrangement according to any of the preceding claims, **characterized in that** the air bag package (2) has a recess (23), in which the gas generator (3) is arranged at least in sections.

13. Air bag arrangement according to any of the preceding claims, **characterized in that** a section of the envelope (22) surrounding the air bag (2) is folded and arranged between the remaining air bag package (2) and the mounting element (5).

14. Air bag arrangement according to any of the preceding claims, **characterized in that** the mounting element is connected to a cover (56), covering the air bag package (2) on a side turned away from the gas generator (3).

15. Method for producing an air bag arrangement, with the steps:
- Providing an air bag package (2) as well as a mounting element (5), having fastening means to establish a positive-locking connection to the air bag package (2) and which has multiple partial elements;
- Inserting the air bag package (2) into the mounting element (5) until a positive-locking connection between air bag package and mounting element is established; and
- Fastening the mounting element (5) to a gas generator support (4).

## Revendications

1. Agencement de poche à gaz pour un système de retenue de passagers de véhicule, comprenant :
- un paquet de poche à gaz (2), qui comporte une poche à gaz (21) pouvant être gonflée afin de protéger un passager de véhicule ainsi qu'une enveloppe (22), dans laquelle la poche à gaz est emballé sous vide ;
- un générateur de gaz (3) servant à gonfler la poche à gaz (21) ;
- un support de générateur de gaz (4), au niveau duquel le générateur de gaz est disposé,
**caractérisé par**
un élément de montage (5) fixé sur le support de générateur de gaz (4) servant à recevoir le paquet de poche à gaz (2), sachant que l'élément de montage (5) présente des moyens de fixation, par l'intermédiaire desquels il est relié par complémentarité de forme au paquet de poche à gaz (2), sachant que l'élément de montage (5) présente plusieurs éléments partiels.

2. Agencement de poche à gaz selon la revendication 1, **caractérisé en ce que** les moyens de fixation comprennent au moins une structure de fixation (51), qui vient en prise avec un évidement (23) du paquet de poche à gaz (2).

3. Agencement de poche à gaz selon la revendication 1 ou 2, **caractérisé en ce que** le paquet de poche à gaz (2) est formé de manière à présenter essentiellement une forme cylindrique, et **en ce que** l'évidement (23) est réalisé dans sa surface de couverture.

4. Agencement de poche à gaz selon l'une quelconque des revendications 2 ou 3, **caractérisé en ce que** l'évidement (23) du paquet de poche à gaz (2) est réalisé sous la forme d'une rainure périphérique.

5. Agencement de poche à gaz selon l'une quelconque des revendications 2 à 4, **caractérisé en ce que** la structure de fixation (51) est réalisée sous la forme d'un élément d'encliquetage, qui s'accroche à l'évidement (23) du paquet de poche à gaz (2), sachant qu'en particulier le support de générateur de gaz (4) présente au moins une ouverture, par l'intermédiaire de laquelle il est possible de procéder au contrôle visuel et/ou mécanique de la venue en prise de l'élément d'encliquetage.

6. Agencement de poche à gaz selon l'une quelconque des revendications précédentes, **caractérisé en ce que** l'élément de montage (5) présente des moyens de fixation, par l'intermédiaire desquels il est fixé au niveau du support de générateur de gaz (4), sachant qu'en particulier les moyens de fixation comprennent au moins un élément d'encliquetage (52), qui s'accroche à un creux (43) du support de générateur de gaz (4).

7. Agencement de poche à gaz selon la revendication 6, **caractérisé en ce que** les moyens de fixation comprennent au moins un boulon de fixation, qui s'engage à travers une ouverture dans le support de générateur de gaz (4).

8. Agencement de poche à gaz selon l'une quelconque des revendications précédentes, **caractérisé en ce que** le générateur de gaz (3) présente au moins un boulon de fixation (31), qui s'engage à travers une ouverture (53) dans l'élément de montage (5) et une ouverture dans le support de générateur de gaz (4).

9. Agencement de poche à gaz selon l'une quelconque des revendications précédentes, **caractérisé en ce que** l'élément de montage (5) est réalisé de manière à présenter une forme de cylindre creux ou une forme annulaire.

10. Agencement de poche à gaz selon la revendication 7 ou 8 et 9, **caractérisé en ce que** l'ouverture (53) traversé par le boulon de fixation (31) est réalisée dans une extrémité de l'élément de montage (5).

11. Agencement de poche à gaz selon la revendication 9 ou 10, **caractérisé en ce qu'**une ouverture (55) servant à introduire le paquet de poche à gaz est prévue lors du montage de l'agencement de poche à gaz dans une extrémité de l'élément de montage (5), et **en ce qu'**une ouverture (54), dans laquelle le générateur de gaz (3) est disposé est prévue dans l'extrémité opposée.

12. Agencement de poche à gaz selon l'une quelconque des revendications précédentes, **caractérisé en ce que** le paquet de poche à gaz (2) présente un évidement (23), dans lequel le générateur de gaz (3) est disposé au moins en partie.

13. Agencement de poche à gaz selon l'une quelconque des revendications précédentes, **caractérisé en ce qu'**une section de l'enveloppe (22), qui entoure poche à gaz (2) est repliée et est disposée entre le paquet de poche à gaz (2) restant et l'élément de montage (5).

14. Agencement de poche à gaz selon l'une quelconque des revendications précédentes, **caractérisé en ce que** l'élément de montage est relié à un élément de recouvrement (56), qui recouvre le paquet de poche à gaz (2) au niveau d'un côté opposé au générateur de gaz (3).

15. Procédé servant à fabriquer un agencement de poche à gaz, comprenant les étapes suivantes consistant à :
- fournir un paquet de poche à gaz (2) ainsi qu'un élément de montage (5), qui présente des moyens de fixation servant à établir une liaison par complémentarité de forme au paquet de poche à gaz (2) et qui présente plusieurs éléments partiels ;
- introduire le paquet de poche à gaz (2) dans l'élément de montage (5) jusqu'à l'établissement d'une liaison par complémentarité de forme entre le paquet de poche à gaz et l'élément de montage ; et
- fixer l'élément de montage (5) au niveau d'un support de générateur de gaz (4).
